(19) Europäisches Patentamt
European Patent Office
Office européen des brevets

(11) **EP 1 361 472 A2**

(12) **EUROPEAN PATENT APPLICATION**

(43) Date of publication:
**12.11.2003 Bulletin 2003/46**

(51) Int Cl.7: **G02F 1/03**, G02F 1/225

(21) Application number: **03076244.7**

(22) Date of filing: **29.04.2003**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **06.05.2002 EP 02076791**

(71) Applicant: **Corning O.T.I. SRL**
**20125 Milano (IT)**

(72) Inventors:
 • **Marazzi, Marco**
  **27100 Pavia (IT)**

 • **Obetti, Gloria**
  **35012 Camposampiero (IT)**
 • **Pircalaboiu, Daniel**
  **20125 Milan (IT)**

(74) Representative: **Poole, Michael John**
  **Corning Limited**
  **Patents & Licensing Department**
  **Quantum House,**
  **Maylands Avenue**
  **Hemel Hempstead, Herts. HP2 7DE (GB)**

(54) **Active optical devices and methods of controlling them**

(57)     An active optical device, preferably a Mach Zehnder modulator, comprises a packaged optical chip (2,3), an optical fibre (13) coupled to the chip (2) to receive an optical output from it, and a photodetector (15) located within the package for receiving part of the radiation light (11) for monitoring the amplitude of that optical output. Said part of the radiation light (11,12) corresponds to the light that is produced by destructive interference in a pair of waveguides (21,22,9) that merge together at a small angle chosen such that a substantial part of the light (ideally nearly all of it) propagates through the substrate of the chip in only two directions (corresponding to a first-order diffraction (11,12)). The optical fibre (13) is coupled to the chip by means of a fibre support (14) (such as a fibre block or a ferrule) made of transparent material, and the photodetector (15) is positioned to receive the radiation light (11) at least partly through the fibre support and at least partly by reflection from the interior of the package.

Using light that passes through the fibre support in this way overcomes the apparent problem that the radiation light emitted in the first-order diffraction lobes is too close to the output waveguide (10,23).

When the device comprises an attenuator and a modulator, the photodiode can serve at the same time to control the bias setting of the modulator and the output power level determined by the attenuator setting.

Fig 9

EP 1 361 472 A2

**Description**

This invention relates to active optical devices for use in digital communication systems (networks, in the broadest sense of the word) and to methods of controlling them. Its primary application is expected to be in optical modulators and it will be described mainly in that context: but it is also applicable to laser sources, optical attenuators, some optical switches, or more generally to any optical device where there is a need to monitor the amplitude (or just the presence) of an optical signal and where parasitic radiation is available.

An important class of optical modulator is based on a Mach-Zehnder interferometer implemented in waveguides, typically formed on a lithium niobate chip. An input light carrier is split into two phase-coherent light beams, transmitted through separate waveguides and recombined to produce interference that imposes an amplitude modulation on the carrier signal. It is inherent in the interference process that the transfer function of the device is a squared cosine function and proper operation requires biasing to the "half-power point" where the cosine function is most nearly linear (minimising second- and higher-order harmonic generation) and permits the greatest range of quasi-linear modulation.

Biasing is ordinarily obtained by imposing an electrical field, but this may not be sufficiently stable owing to changes in environmental conditions (such as temperature, humidity or stress) and to possible accumulation of electrostatic charges. It is known that it is advantageous to counter such effects by monitoring the optical output of the modulator and adjusting the bias voltage accordingly: electronic circuits for effecting such adjustments ("automatic bias control" circuits) controlled by an electrical signal generated by a photodetector are readily available and in general use.

As a matter of fact, to provide input to a bias control circuit, a part of the optical output of the modulator must be applied to this photodetector, usually in the form of a photodiode, to obtain an electrical signal. Typically an electrical signal at an audio frequency (e.g. 1 kHz) is superimposed on the bias DC supplying voltage and applied to the electrical bias input of the modulator; a signal component of the same frequency is extracted from the photodetector output and applied to the bias control circuit. It is an attractive option to apply to the photodetector a proportion of the leakage or "radiation" light escaping from an appropriate part of the waveguide, which will often largely represent the radiation discarded when the operation of the modulator requires destructive interference, rather than to take a part of the potential output signal.

The photodetector could be located on the modulator chip, but this requires (a) a dedicated chip design and (b) specific precautions for ensuring accurate positioning and alignment of the photodetector on the chip. Another possibility is to locate the photodetector at any convenient point (outside or inside the package of the device) and conduct light to it by an optical fibre. If the light to be conducted is radiation light propagating in the substrate, coupling into the optical fibre has a low efficiency, and in any case this technique has high assembly costs (because of the additional optics) and additional reliability issues.

Various attempts have therefore been made to use photodetectors located off the chip of the device but within its package, without using an optical fibre connection. For example:

US5764400 to Itou et al proposes (among other arrangements) the use of a single microlens at the same time to couple the output of the chip to an optical fibre and to direct leakage light to a photodetector. It is difficult to position the microlens with the precision required, and even if this can be done it is still difficult to achieve a sufficient separation between the output and radiation light within the confines of a package with dimensions proportionate to those of the chip.

US5953466 to Kubota et al suggests that if radiation light is collected by a waveguide and caused to interfere with more radiation light that was not collected by the waveguide, a sufficient output can be obtained from a photodetector located between the chip and a collimator coupling the output light to a fibre. This requires substantial lengthening of the chip and does not overcome the difficulty of achieving sufficient separation of the output and monitor light.

WO01/57564 to Green et al suggests that after a chip has been designed and a prototype produced, one may be able to discover empirically a position in which a photodetector can be placed to collect sufficient scattered radiation light to provide the required signal. Since optical chips are not currently designed or manufactured to scatter light in particular directions, their quality control procedures may not be designed to ensure that they do so consistently, and so this appears an unreliable technique.

EP1,186,936 to Yamada et al proposes ways in which radiation light might be reflected from a special surface of a transparent fibre support to emerge as a transverse beam, intended to fall on a photodetector located at the sidewall of the package. This appears to require a very small photodetector, if the package is not to be enlarged to accommodate it, and still requires high precision in location of the reflecting surface and the photodetector, which may be frustrated because the direction of the radiation light is temperature sensitive.

The active optical device in accordance with the present invention comprises an optical chip contained in a package, an optical fibre coupled to the chip to receive an optical output from it; and a photodetector located within the package for receiving radiation light responsive to the amplitude of that optical output and is *characterised in that*

(a) the said radiation light comprises light radiated by destructive interference in a pair of waveguides that merge together at a chosen small angle and sufficiently smoothly for a substantial part of the light so radiated to propagate through the substrate of the chip in only two directions that diverge from the output light in the merged waveguide;

(b) the said optical fibre is coupled to the chip by means of a fibre support (such as a fibre block or a ferrule) made of material transparent to the said light;

(c) at least part of the interior of the said package is reflective at the operating wavelength; and

(d) the photodetector is positioned to receive said radiation light at least partly through the fibre support and partly by reflection from the interior of the package.

The invention includes a method of controlling an active optical device comprising an optical chip contained in a package at least part of the interior of which is reflective at the operating wavelength, an optical fibre coupled to the chip to receive an optical output from it; and a photodetector located within the package for receiving radiation light responsive to the amplitude of that optical output and using a feedback circuit responsive to the photodetector to control at least one device on the chip which is *characterised by*

(a) generating the said radiation light by destructive interference in a pair of waveguides on the chip that merge together at a chosen small angle and sufficiently smoothly for a substantial part of the light so radiated to propagate through the substrate of the chip in only two directions that diverge from the output light in the merged waveguide;

(b) coupling the said optical fibre to the chip by means of a fibre support made of material transparent to the said light and

(c) positioning the photodetector to receive said radiation light at least partly through the fibre support and partly by reflection from the interior of the package.

By using a transparent fibre support in this way, the apparent difficulty that the only directions in which a large proportion of the radiation light (ideally nearly all of it) can be concentrated is too close to the output of the chip is overcome. It is possible to design the transparent fibre support so that the bulk of the light from at least one of the two lobes emerges from its end face, and to position the photodiode to intercept it (or if desired, to position two photodiodes, one to intercept each of the beams),but we have found that this is unnecessary as ample reflection can be obtained from the interior of the package to ensure that sufficient light can be collected from a photodiode even if a large part of it is scattered by the various interfaces of the fibre support, irrespective of the design of the support (provided only that it is transparent) and almost irrespective of the position of the photodiode, provided it is between the output end of the chip and the corresponding end of the package.

The angle between the two merging waveguides and the exact shape of the merging region that is required for satisfactory or optimum performance will vary somewhat depending on the effective refractive indexes of the waveguides, their mode field dimensions, and the working wavelength as well as on the choices made in compromise with other variables such as modulator optical insertion loss, photodiode current amplitude, signal-to-noise ratio, dynamic range, etc., and cannot be fully defined in the general case. For typical planar waveguides based on titanium-diffused lithium niobate and working in the usual communications wavelength ranges and with the merging region designed according to recognised techniques to be nearly adiabatic, a half-angle smaller than about 0.5° is likely to be required (throughout this application, the angular positions of waveguides are described with reference to the axis of the single (output) waveguide formed on merging and it will be assumed that the half-angles of the two merging waveguides are equal (so that the total angle between the two merging waveguides will be twice the angle reported)) and a half-angle of about 0.35° is considered optimum. For ion-exchanged glass waveguides, we expect similar half-angles to be appropriate; for waveguides based on gallium arsenide, indium gallium arsenide or indium phosphide, somewhat larger half-angles (up to 1 or possibly 2°) are expected to be acceptable.

By using such angles, we have been able to obtain a diffraction pattern in which nearly all the radiation light is concentrated in one of two "first order" lobes, with peak intensity in directions making angles with the output waveguide of about 0.51° as projected onto the plane containing the axes of the waveguides and about 0.57° in the perpendicular "depth" direction.

If the angle between the waveguides is increased, the divergence of the radiation light from the direction of the output waveguides increases, but the proportion of the light contained in the two first-order diffraction lobes rapidly decreases with the appearance of higher-order lobes, which may fail to enter the transparent light guide or even to fall on the end-face of the chip: the longitudinal faces of the chip will generally not be smooth and may be metallised, so they cannot be relied on to reflect light in a predictable and stable way. Too small an angle reduces the divergence and so makes it necessary to increase the length of the chip to get sufficient separation, and may also generate higher-order lobes.

Usually the optical device will include an optical fibre coupled to the chip to deliver an input optical carrier, but alternatively the carrier may be generated on the chip, for instance by a laser diode, or other forms of input coupling might be used.

Preferably the photodetector is mounted on the wall of the package (enclosure) of the device, either directly or using a sub-mount, for instance of ceramic material. The electrical connections it requires can then be made in a simple manner, for instance by the use of wire leads or of connecting pins that pass through the wall of the package: it may be convenient to mount it as a preliminary step, before the chip itself is installed in the package. Alternatively, the photodetector could be placed after the fibre coupling is in place on the chip.

Preferably the transparent material of which the fibre support is made is selected from optical glasses (including silica glass), crystalline quartz, or lithium niobate and preferably it is of optical quality. Lithium niobate has the advantage of minimising thermal stresses when used in combination with a chip of the same material (provided the crystal orientations of the two components are appropriately chosen).

If it is desired to collect some light that has not been reflected from the interior of the package, then preferably there is a free-space optical path length of at least a few millimetres between the free end of the fibre support and the photodetector, in which the linear separation of the radiation light from the output optical fibre may increase.

The output end-face of the chip is likely to be inclined (in the plane of the waveguides) at an angle of about 6°, in order to avoid undesirable back-reflection effects, and the face of the fibre support that is bonded to it will be inclined at about 8 or 9° in the opposite direction to maintain proper coupling: unless otherwise designed, the opposite end face of the fibre support will in consequence be inclined at about 2 or 3° relative to the normal to the longitudinal axis of the chip. When the transparent fibre support is designed to transmit light in a narrow beam, rather than to scatter it, it may be desirable for the facing surface of the photodetector to be parallel to that inclined end face, or ideally perpendicular to the maximum intensity ray, and for the end face of the fibre block from which the radiation light emerges to be inclined to increase the refractive deflection and so the separation.

If the inherent reflectiveness of the interior of the package is insufficient, it may be coated with a suitably reflective material, preferably in a matt condition since diffuse reflection better achieves uniformity of illumination. Metal coatings of appropriate reflectivity, and especially gold, are preferred as offering least contamination hazard.

In a particularly important development of the invention, the chip comprises an optical attenuator in series with an optical modulator, and the photodetector output is used both for imposing the bias operation point of the modulator and at the same time for setting the degree of attenuation to achieve the desired optical output level.

One preferred type of integrated attenuator/ modulator chip that is suitable for use in this way comprises a Y-branch attenuator and a Mach Zehnder modulator, and in this case we prefer to locate the attenuator upstream of the modulator so that the modulator is connected to a side arm of the attenuator (not to its common waveguide) as we have found that this significantly improves cross-talk, as described in our International Patent Application published as WO01/54318 to which reference should be made for further details. In this type of chip, we prefer to use a tilted (unsymmetrical) Y-branch attenuator and more especially a configuration in which the modulator is connected to a branch of the attenuator that is aligned with its common waveguide. It may be desirable to coat the "dummy" waveguide of the Y-branch attenuator with a light-absorbing substance (a metal, for instance) to prevent either the guided light propagating in it or light radiating from it from reaching the photodetector at amplitudes comparable with that of the radiation light from the modulator; without this, there may in some cases be uncertainty whether the electrical output of the photodetector will rise or fall when the degree of attenuation rises and some risk that it will not change sufficiently in either direction.

Another preferred type of integrated attenuator/ modulator chip comprises two Mach Zehnder modulators in series, the first acting as an attenuator and so controlling the level of input to the second, functioning as a modulator in the normal way. In this case our experience so far suggests that radiation light from the first modulator (attenuator) will almost all escape from the sides of the chip and not reach its output end, and that provision to absorb it will not usually be necessary.

In each of these two cases, an alternating pilot signal of a chosen frequency (say 1kHz) is applied to the modulator bias as before and a filter circuit is used to extract two components from the photodetector output, the first of which is used as input for an automatic bias control (ABC) circuit for the modulator and the second as input to a feedback control circuit. If the ABC circuit is of the usual type so far referred to, the first component extracted by the filter circuit may just be the component of the photodetector output at the frequency chosen for the pilot signal. The second component extracted by the filter circuit may be the DC component of the photodetector output.

Once the correct bias point has been established (and while it is held by continuing to operate the automatic bias control circuit) the DC electrical output of the photodetector will vary in a readily predictable way with the degree of attenuation, and its conventional feed-back circuit enables a desired output power setting to be established and maintained.

Provided that the light reaching the photodetector is substantially all radiation light coming from the modulator section of the chip, the electrical output of the photodetector varies in a direct and substantially linear manner with the optical signal level in the modulator, and in most cases will also vary in a direct and substantially linear manner with the control voltage applied to the attenuator, within its intended working range.

Although (as just indicated) the DC output of the photodetector varies linearly with the output signal level, it will not usually be directly proportional to it. A proportion of the input light will be lost in the device (corresponding to the characteristic called the "insertion loss" of the device) and a proportion of that light is likely to reach the photodetector, unless special measures are taken to prevent it. This will generally result in a uniform "background" DC electrical signal level which will be added to the output resulting from the signal light. A further significant development of the invention allows an electrical signal directly proportional to the output to be obtained: this will often be preferred.

In accordance with this embodiment of the invention, the first component extracted by the filter circuit is at the second harmonic of the chosen pilot signal frequency (that is twice its frequency) and is used as input to an automatic bias control circuit which operates to adjust the bias voltage not to maximise the output signal at the chosen frequency but to substantially eliminate or at least minimise the second harmonic of that frequency. The second component extracted, to control the attenuator setting, is then an alternating signal at the chosen pilot signal frequency.

The invention will be further described, by way of example, with reference to the accompanying drawings in which:

Figure 1 is a diagrammatic plan of a modulator in accordance with the invention;
Figures 2 and 3 are enlarged views in plan and elevation respectively of a part of the modulator shown in Figure 1;
Figure 4 is a diagrammatic plan view of a waveguide Y-junction;
Figure 5 is a plot of the simulated radiation field of that Y-junction;
Figure 6 is an intensity diagram obtained by measurement from a practical Mach Zehnder modulator;
Figure 7 is a diagram of a first integrated attenuator/ modulator in accordance with the invention;
Figure 8 is a diagram of an alternative integrated attenuator/ modulator in accordance with the invention; and
Figure 9 is a diagram of the relevant part of another modulator in accordance with the invention.

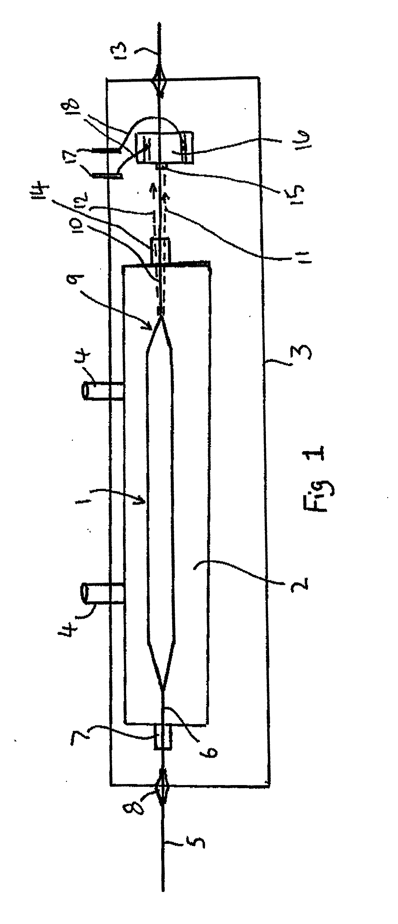

Figure 1 illustrates the basic principles of the invention, and shows (diagrammatically with the angles considerably enlarged) a Mach Zehnder modulator 1 implemented in planar waveguides on a lithium niobate chip 2 contained in a package 3. Pillars 4, 4 provide electrical connections for the chip in the usual way. The modulator requires an input of continuous-wave light (or carrier) and this is supplied from an external source by way of an input light fibre 5 coupled to the input waveguide 6 of the chip by a fibre block (or other form of fibre support) 7 and protected where it enters the package 3 by a sleeve 8. The modulator 1 is conventional except that its waveguide merging region 9, leading in the usual way to a single output waveguide 10, is designed with a shape and in particular merging angles such that when interference is destructive, almost all the light energy is radiated in only two lobes 11 and 12, representing a first order of diffraction and in the figure shown by their rays of highest intensity. The lobes are of small cross-section and only slowly diverge from the direction of the waveguide 10.

In accordance with the invention, an output optical fibre 13 is coupled to the waveguide 10 by a fibre block 14 which is made of optical quality silica glass, and in this form of the invention is so designed that the radiation light in the lobes may pass through it without major losses and emerge in relatively narrow beams from its end face . A photodiode 15 is mounted on a support 16 formed integrally with the package 3 in a position to intercept and detect the light in the beam corresponding to lobe 11 and is electrically connected to external pins 17,17 by wire leads 18,18.

The radiation light in lobe 12 does not fall directly on the photodiode, but as the package 3 is made of a material that reflects radiation in the working wavelength range of the modulator, a substantial proportion of it, after being diffusely reflected a number of times from the wall of the package, will eventually fall on the photodiode and will contribute to its electrical output. If thought desirable, this effect may be enhanced by providing one or more appropriately positioned and angled reflecting surface.

It is to be noted that the lobe 11 is further from the axis of the waveguide 10 at larger distances from the output end-face 19. We have found a spacing of only a few millimetres (say 1-10 mm) from the free end-face of the transparent fibre support is sufficient, so that it is often possible to modify an existing device design to use the present invention without any need to modify the package dimension. However, a larger spacing (say around 15-20 mm) could be used, especially if it were desired to increase the amount of light collected after reflection from the inside of the package.

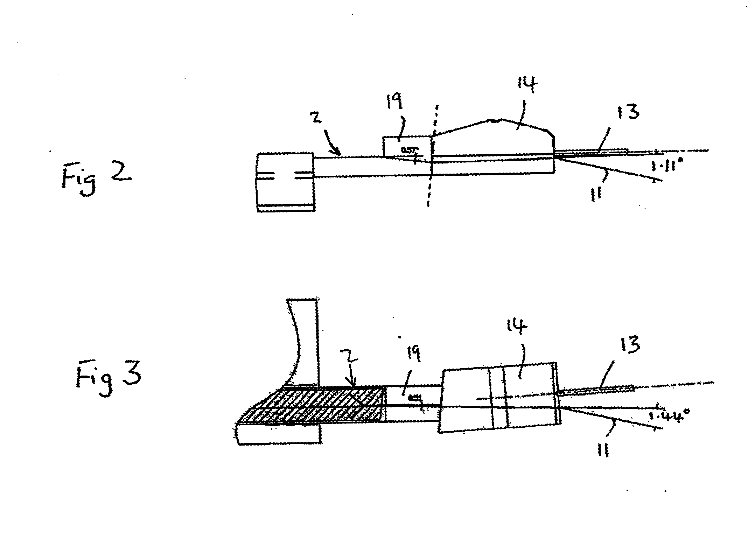

As seen in Figures 2 and 3, the chip 2 has a portion 19 of greater thickness at its output (right-hand) end to facilitate alignment of the fibre block 14, and its end face is vertical but inclined at an angle of 6° (shown here as clockwise in the view of Figure 3) with respect to the normal to the optical axis of the chip, for the usual reason of avoiding back-reflections; to maintain correct optical alignment, the adjacent face of the fibre block 14 needs to be inclined at 8.7° with respect to the axis of the fibre 13, with the result that the fibre is deflected 2.7° in the opposite direction. The ray representing the maximum intensity of the radiation lobe, initially propagating in a direction about 0.57° downwards and 0.51° laterally with respect to the optical axis of the chip, is deflected by refraction at the chip/fibre block interface and at the fibre block/air interface and emerges in a direction about 1.11° vertically and 1.44° laterally with respect to that axis (about 1.11° and 4.14° with respect to the axis of fibre 13).

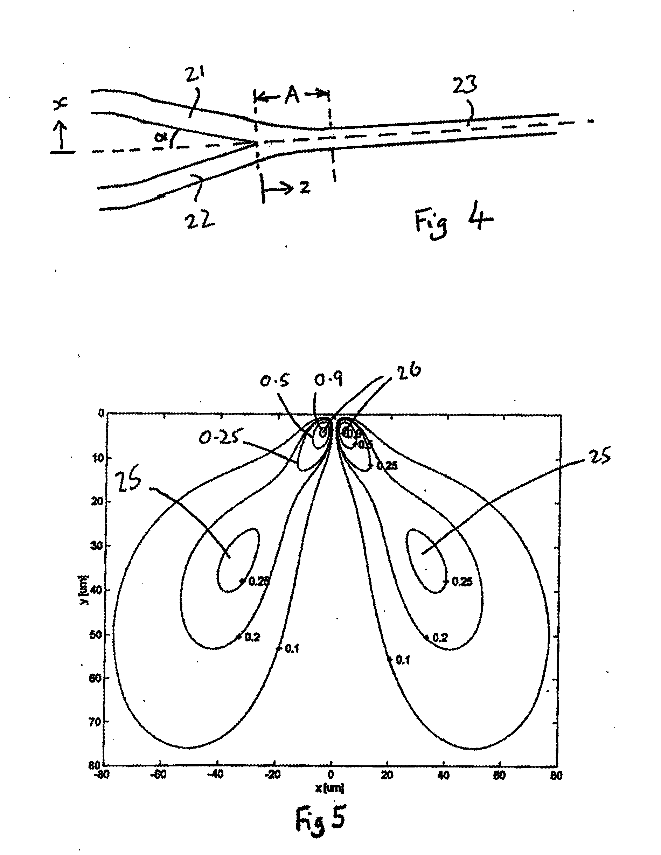

The Beam Propagation Method of simulation (BPM) was used to analyse the effect of merger in a lithium niobate waveguide Y-junction, which is sketched in Figure 4. The straight parts 21,22,23 of the waveguide were all alike, and designed to support a single mode with a mode field about 9.5 μm wide and 6 μm deep. The shape of the merging zone A was first optimised, and thus set to the formula

$$y = Dx/L - \tfrac{1}{2}D\pi \sin (2\pi x/L)$$

where D and L are shape parameters that can be freely chosen within limits. In the simulation the values D = 15μm, L = 2500μm and α = 0.35° were adopted. Figure 5 shows the simulated intensity distribution at the output (z = 3mm) for fully destructive interference (Φ = 0.5). It is clearly apparent that although there is some radiation light over a relatively large area, and a pair of secondary lobes 25, a very large proportion is concentrated in the two primary lobes 26. By repeating this simulation for a second position, it was inferred that the maximum intensity ray of each primary lobe propagated in a direction making angles of 0.51° laterally and 0.57° downwards with respect to the axis of the output (merged) waveguide (as already mentioned).

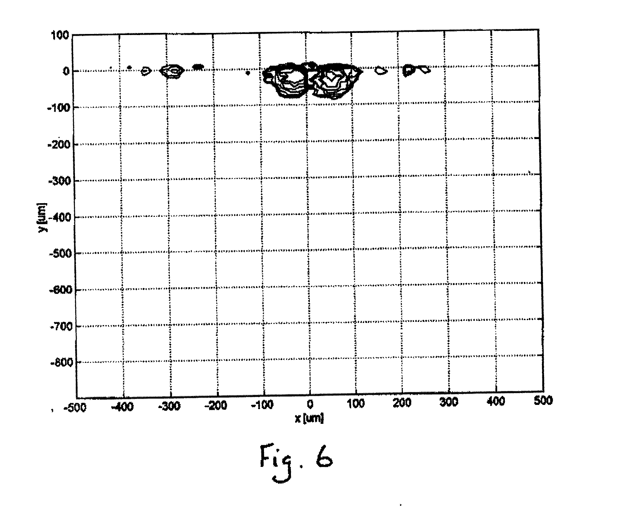

The results of the simulation were qualitatively confirmed by an experiment with a sample Mach Zehnder modulator (not fully optimised to maximise the proportion of radiation light in the two primary lobes) and the intensity map shown in Figure 6 was obtained.

Figure 7 shows the invention applied to a Mach Zehnder interferometer 30 and an inclined Y-branch attenuator 31 integrated on a single chip 32. A photodiode 33 is positioned to receive radiation light coming predominantly from the modulator and passing, at least in part, through a transparent fibre block 34, just as in the simpler structure of Figure 1. A local coating 36 of light-absorbing material (such as a metal, for example titanium, nickel or aluminium) is provided over a part of the dummy waveguide 37 of the attenuator to absorb light propagating in the dummy waveguide that might otherwise reach the photodiode and complicate the interpretation of its signal. With a 1kHz pilot signal applied to the modulator in the usual way, the output from the photodiode may be processed by an amplifier 38 and is then separated by a filter circuit 39 which extracts a 2 kHz (second harmonic) component, which is taken to an automatic bias control circuit 40 that maintains correct biasing of the modulator 30 by adjusting the DC bias until this second harmonic component is substantially eliminated, or at least minimised, and a 1KHz (fundamental) component which is taken to a conventional feed-back control circuit 41 which adjusts the voltage applied to the attenuator 31 so as to obtain a desired light intensity level in the modulator.

Alternatively the filter circuit 39 could extract a 1kHz component to control an automatic bias control circuit of the more usual type that adjusts the bias setting to maximise this component and a DC component to control the attenuator, as discussed above.

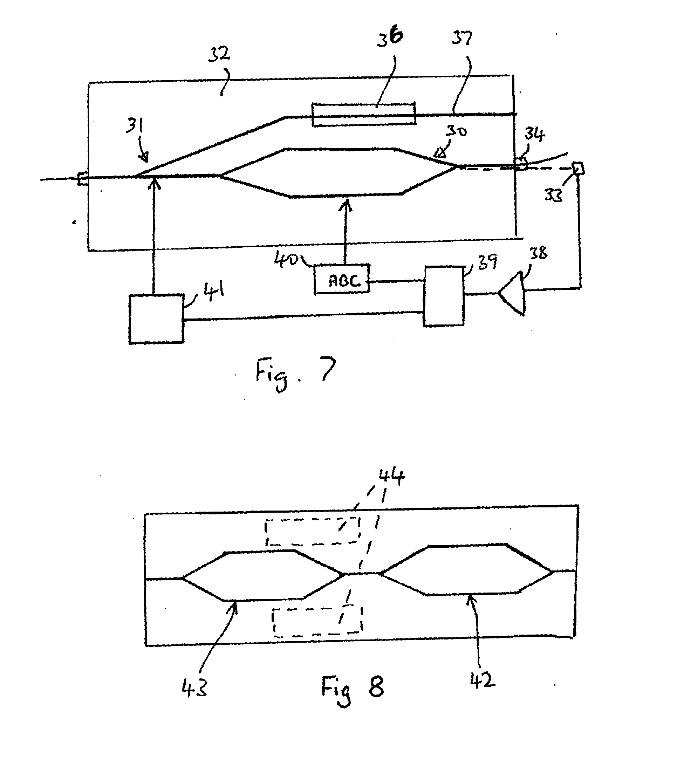

Figure 8 shows the chip only of an alternative design of integrated attenuator/modulator; the modulator 42 functions exactly as modulator 50 in figure 7 and the components not shown in this figure may be identical; it differs in having a second Mach Zehnder interferometer modulator 43 to serve as its attenuator: in this case, discarded light is scattered into the chip substrate, without using a dummy waveguide. Absorbing coatings 41 may be applied to appropriate parts of the chip surface if found necessary, but our experience to date has been that light discarded in this position does not reach the photodiode in amounts sufficient to have a significant influence on its output.

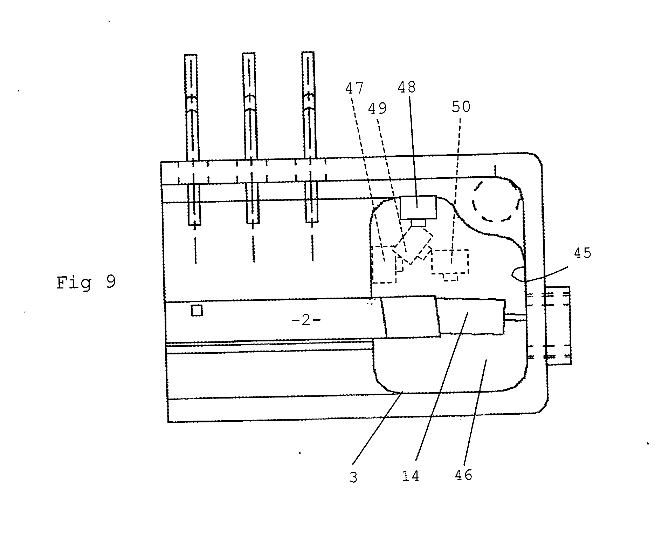

Figure 9 shows about half of another modulator in accordance with the invention, including the output end of the chip 2, part of the package 3, and the transparent fiber support 14. In this case, an ordinary optical glass fiber support is used, without any precautions to prevent (or to promote) scattering of light at the surfaces of the glass itself or those of the adhesive used to secure it. Nearly all the radiation light, whether scattered or transmitted directly through the fiber support, falls somewhere on the reflective internal surface 45 of the package 3, which is coated with matt gold. As a result of multiple (mostly diffuse) reflections at this surface and elsewhere, the free space between the adjacent ends of the chip 2 and the package 3 becomes filled with light of relatively uniform intensity, and a photodiode placed almost anywhere in this space can be expected to provide an output satisfactorily representative of the modulator output intensity, even if the initial direction of the radiation light varies as a result of temperature changes or other effects, provided that substantially all of it still falls on the transparent fiber support. A recess 46 may be provided in the base (and/or the lid) of the package to accommodate the photodiode more easily and with the recess shown in the drawing we have obtained substantially the same output from photodiodes in the positions 47, 48, 49 and 50, all centered in the plane of the top of the chip 2, though if preferred they could be centered out of that plane.

## Claims

**1.** An active optical device comprising an optical chip contained in a package, an optical fibre coupled to the chip to receive an optical output from it; and a photodetector located within the package for receiving radiation light responsive to the amplitude of that optical output **characterised in that**

(a) the said radiation light comprises light radiated by destructive interference in a pair of waveguides that merge together at a chosen small angle and sufficiently smoothly for a substantial part of the light so radiated to propagate through the substrate of the chip in only two directions that diverge from the output light in the merged waveguide

(b) the said optical fibre is coupled to the chip by means of a fibre support made of material transparent to the said light;

(c) at least part of the interior of the said package is reflective at the operating wavelength; and

(d) the photodetector is positioned to receive said radiation light at least partly through the fibre support and partly by reflection from the interior of the package.

**2.** An active optical device in accordance with claim 1 comprising planar waveguides based on titanium-diffused lithium niobate which merge at a half-angle smaller than 0.5°.

**3.** An active optical device in accordance with claim 1 or claim 2 in which the photodetector receives at least part of the radiation light directly in free space from the fibre support.

**4.** An active optical device as claimed in any one of claims 1-3 in which the photodetector is mounted directly or indirectly on the wall of the said package.

**5.** An active optical device as claimed in any one of claims 1-4 in which the transparent material of which the fibre support is made is selected from optical glasses, crystalline quartz or lithium niobate.

**6.** An optical modulator in accordance with any one of claims 1-5.

**7.** An active optical device in accordance with any one of claims 1-6 in which the chip comprises an optical attenuator in series with an optical modulator, and further including

(a) a circuit for generating an alternating pilot signal of a chosen frequency and superimposing it on a bias voltage supplied to the optical modulator and

(b) a filter circuit for extracting from the photodetector output a first component for input to an automatic bias control circuit for the modulator and a second component for input to a feedback control circuit for setting the degree of attenuation to achieve a desired optical output level.

**7.** An active optical device in accordance with claim 6 in which the first component is at the frequency of the first harmonic of the said chosen frequency and the second component is at the said chosen frequency.

**8.** An active optical device in accordance with claim 7 that also includes an automatic bias control circuit which seeks to eliminate of minimise its control signal.

**9.** An active optical device in accordance with claim 7 in which the first component is at the said chosen frequency and the second component is a DC component.

**10.** An active optical device in accordance with any one of claims 7-9 in which the integrated attenuator/modulator chip comprises a Y-branch attenuator and a Mach Zehnder modulator. 11 A method of controlling an active optical device comprising an optical chip contained in a package at least part of the interior of which is reflective at the operating wavelength, an optical fibre coupled to the chip to receive an optical output from it; and a photodetector located within the package for receiving radiation light responsive to the amplitude of that optical output and using a feedback circuit responsive to the photodetector to control at least one device on the chip which is **characterised by**

(a) generating the said radiation light by destructive interference in a pair of waveguides on the chip that merge together at a chosen small angle and sufficiently smoothly for a substantial part of the light so radiated to propagate through the substrate of the chip in only two directions that diverge from the output light in the merged waveguide; and

(b) coupling the said optical fibre to the chip by means of a fibre support made of material transparent to the said light and positioning the photodetector to receive said radiation light at least partly through the fibre support and partly by reflection from the interior of the package.

**12.** A method as claimed in claim 11 of controlling an optical device comprising an optical attenuator in series with a modulator in which the photodetector output is used both for imposing the bias operating point of the modulator and at the same time setting the degree of attenuation.

**13.** A method as claimed in claim 12 comprising using a filter circuit to extract form the photodetector output a first component for use in imposing the bias operating point and a second component for use in setting the degree of attenuation.

**14.** A method as claimed in claim 12 comprising superimposing an alternating pilot signal of a chosen frequency on the bias voltage of the modulator, using as the first component a second harmonic of the said chosen frequency and as the second component the said chosen frequency itself, and using a bias control circuit that seeks to eliminate or minimise its input signal (that is the second harmonic component).

**15.** A method as claimed in claim 12 comprising superimposing an alternating pilot signal of a chosen frequency on the bias voltage of the modulator, using as the first component the said chosen frequency and as the second component a DC component, and using a bias control circuit that seeks to maximise its input signal.

Fig 1

EP 1 361 472 A2

Fig 2

Fig 3

Fig 4

Fig 5

Fig. 6

Fig. 7

Fig 8

Fig 9

47 48
49 50
45
-2-
3 14 46

EP 1 361 472 A2